# EUROPEAN PATENT APPLICATION

(11) **EP 4 432 650 A1**
(43) Date of publication of application: **18.09.2024**
(21) Application number: 23161828.1
(22) Date of filing: 14.03.2023
(51) Int. Cl.: H04N 7/15

(54) **SYSTEM FOR A VIDEOCONFERENCE WITH N PARTICIPANTS, METHOD OF USING THE SYSTEM FOR CONDUCTING A VIDEOCONFERENCE WITH N PARTICIPANTS, HOST COMPUTING DEVICE, CLIENT COMPUTING DEVICE, METHOD FOR IMPLEMENTING HUMAN-TO-HUMAN INTERACTIONS IN A VIDEOCONFERENCE WITH N PARTICIPANTS, HOST METHOD, CLIENT METHOD AND COMPUTER PROGRAM PRODUCT**

(71) Applicant: Universität Heidelberg, 69117 Heidelberg (DE)
(72) Inventor: ROTHER, Carsten, 69117 Heidelberg (DE); BLAKE, Andrew, Cambridge, CB2 8BZ (GB)
(74) Representative: Müller-Boré & Partner Patentanwälte PartG mbB

(57) **Abstract**

An aspect of the present invention relates to a system (10) for a videoconference with N participants (P1, P2, P3, P4), N being an integer greater than or equal to 2, the system comprising: N sensor devices (121, 122, 123, 124), wherein each sensor device of the N sensor devices (121, 122, 123, 124) is assigned to one participant of the N participants (P1, P2, P3, P4), N display devices (141, 142, 143, 144), wherein each display device of the N display devices (141, 142, 143, 144) is assigned to one participant of the N participants (P1, P2, P3, P4), and at least one host computing device (16) configured to generate a virtual space (18), wherein the virtual space (18) comprises a virtual representation (V1, V2, V3, V4) for each of the N participants (P1, P2, P3, P4), and wherein to each of the N participants (P1, P2, P3, P4) one virtual representation (V1, V2, V3, V4) is assigned, wherein, for each participant (P1): the assigned sensor device (121) is configured to capture a physical state of at least one body part, such as an eye, of the participant (P1), the physical state of the at least one body part of the participant (P1) is determined and the assigned virtual representation (V1) is adapted based on the determining of the physical state of the at least one body part of the participant (P1), and the assigned display device (141) is configured to display, to the participant (P1), the virtual representation (V2, V3, V4) of at least one of the remaining participants (P2, P3, P4) of the videoconference in the virtual space (18). Further aspect relate to a method of using the system for conducting a videoconference with N participants, a host computing device, a client computing device, a method for implementing human-to-human interactions in a videoconference with N participants, a host method, a client method and a computer program product.

## Description

The present invention relates to a system for a videoconference with N participants, a method of using the system for conducting a videoconference with N participants, a host computing device, a client computing device, a method for implementing human-to-human interactions in a videoconference with N participants, a host method, a client method and a computer program product.

In typical video conferencing systems, an input device, usually a single camera is capturing the appearance of each participant. The captured video is simultaneously sent to all participants and presented on their output devices, usually screens, such that each participant is able to perceive the received video of all other participants.

Video conferencing has been widely adopted recently, especially in the context of coworking applications. However, existing systems cannot deliver the experience of real-world human conversations. One reason is the missing eye contact between participants.

Therefore, it is a problem to be solved by the present invention to provide a system and a method which enable the implementation of improved human-to-human interactions in a videoconference with multiple participants.

This problem is solved by the independent claims. Preferred embodiments result from the respective dependent claims.

A first aspect of the present invention relates to a system for a videoconference with N participants, N being an integer greater than or equal to 2, the system comprising:
- N sensor devices, wherein each sensor device of the N sensor devices is assigned to one participant of the N participants,
- N display devices, wherein each display device of the N display devices is assigned to one participant of the N participants, and
- at least one host computing device configured to generate a virtual space,
   o wherein the virtual space comprises a virtual representation for each of the N participants, and
   o wherein to each of the N participants one virtual representation is assigned,
- wherein, for each participant:
   ∘ the assigned sensor device is configured to capture a physical state of at least one body part, such as an eye, of the participant,
   ∘ the physical state of the at least one body part of the participant is determined and the assigned virtual representation is adapted based on the determining of the physical state of the at least one body part of the participant, and
   ∘ the assigned display device is configured to display, to the participant, the virtual representation of at least one of the remaining participants of the videoconference in the virtual space.

Advantageously, this aspect allows for automatically establishing eye contact between the participants of a videoconference. Participants can intentionally make eye contact to signal that they want to make a contribution to a conversation, which can be recognized by all participants of the videoconference. Additionally, all participants can observe if another participant is, e.g., listening carefully or taking notes.

By the above aspect, a real-world conversation may be simulated better than by conventional systems. The above system can introduce nearly realistic human-to-human interactions in a videoconference. The system can render a videoconference more immersive and more natural. In other words, the immersion in a digital conversation over conventional videoconferencing systems may be enhanced by the above aspect. Thereby, a conversation in a videoconference may be rendered more realistic.

The system allows for mimicking of interactions of participants in a videoconference similar to reality that is a real conference. The participants can identify or recognize where other participants are looking. Specifically, the participants can identify or recognize if a particular participant is looked at or to which of the other participants the participants are looking.

Further advantageously, the system according to the first aspect may be implemented, integrated or installed in already existing systems easily and in a cost-efficient manner since no special hardware is required. Instead, state-of-the-art computing devices, such as laptops and webcams, may be used.

Herein, the term "participant" generally refers to human-beings. However, in principle, the term "participant" may also refer to animals, such as dogs, cats, etc., or other objects, such as a chair, a table or a plant.

Herein, the term "assigned to" may also be referred to as "allocated to". The term "assigned to" may include that a participant may have a specific sensor device and/or a specific display device. A participant may further have a specific virtual representation to participate in the videoconference. Assigning may be understood as a mapping between one or more participants and a specific sensor device and/or a specific display device and/or a specific virtual representation. For example, one, in particular only one, sensor device and/or one, in particular only one, display device and/or one, in particular only one, virtual representation may be assigned to multiple participants or vice-versa. The assigning may particularly be a one-to-one mapping. That is, one, in particular only one, sensor device and/or one, in particular only one, display device and/or one, in particular only one, virtual representation may be assigned to one, in particular only one, participant or vice versa.

Herein, the term "virtual" refers to a computer-generated depiction of an object or a subject, which is only visible when looking at or observing one of the display devices. In this respect, the virtual space may, for example, be a depiction of a conference or meeting room or any other room in which a conference or conversation can be held, such as a dining room or a bar.

The virtual space may be generated or created by modelling or using a model of or simulating a three-dimensional environment. For example, third-party software development kits (SDK) may be used. The virtual space may for example be rendered from an image of a space or room, i.e. the virtual space may be a three-dimensional model of the image. Said model may be completely fictional or artificial.

The term "virtual representation" may include or be an avatar of one or more of the participants. The term "virtual representation" may be referred to as "avatar" in the context of this description. The term "virtual representation" may in particular refer to photorealistic or arbitrarily abstracted representations or depictions of one or more of the participants. For example, one participant of the videoconference may be represented or depicted as a human-being looking similar as the represented participant or as a cartoonish model of the participant. One virtual representation may also represent or depict multiple participants.

The virtual space and the virtual representations of the N participants may be generated in one or more subsequent initializing steps. In one initializing step, for example, the virtual space may be chosen and/or loaded and/or rendered from a variety or a selection of meeting environments, such as a conference room or meeting room or any place in or at which the participants can meet for a conversation. The variety or selection of meeting environments may be chosen and/or loaded and/or rendered by one or more of the participants, in particular each participant, and/or the at least one host computing device. The environments may be stored in a participant's computing device, also referred to as "client computing device" herein, including a display device and/or in the at least one host computing device. The virtual space may be rendered from an image of the meeting environment, which may be stored in a participant's computing device and/or the at least one host computing device, by loading or generating a corresponding three-dimensional model of the image by the participant's computing device and/or the at least one host computing device. In the same or another initializing step, the virtual representation of each participant may be, by each participant or the at least one host computing device, chosen and/or loaded and/or rendered from a variety or selection of real or abstract depictions of the participants, which may be stored in a participant's display device and/or the at least one host computing device. Each virtual representation may be rendered upon choosing and/or selecting a virtual representation from the variety or selection of depictions by loading or generating a three-dimensional model of the chosen or selected depiction.

The system may comprise N client computing devices. Each of the N client computing devices may be assigned to one, in particular only one, participant of the N participants. The client computing device of each participant may comprise or include a display device assigned to the participant and a sensor device assigned to the participant.

The at least one host computing device may comprise or be one or more server computers and/or a cloud computing platform and/or a distributed computer system. The at least one host computing device may include or be one host computing device, or 2, 3, 4, 5, 6, 7, 8, 9 or 10 host computing devices. The at least one host computing device may comprise or be a computing device having the hardware and/or software required for generating the virtual space. At least one of the N client computing devices may also be used or serve as or be the at least one host computing device.

Preferably, the physical state may include or be orientation and/or position and/or motion. The physical state may also include or be a change in orientation and/or position and/or motion.

The physical state of at least one body part may thus also include or be the field of gaze, in particular the point of gaze or line of sight, and/or the facial expression and/or the body pose of a participant. The physical state of the at least one body part may further include or be body expressions such as waving, smiling, winking, head nodding, head shaking, etc.

The physical state may thus also comprise the location of the at least one body part and/or the transition of the at least one body part from one location, e.g. an initial location, to another location, e.g. a final location.

The body part may for example include or be one of: an eye, an eyebrow, an arm, a hand, a finger, a head, a torso, a mouth, or a lip, etc. The at least one body part may include or be at least the upper body of a participant including all the movable body parts, such as both eyes, eyebrows, lips, head, arms, hands and fingers and so on.

That is, the physical state of the at least one body part may for example refer to a participant moving his or her lips to smile, and/or moving his or her eyes to wink and/or moving his or her hand or hands to wave.

According to the above aspect, the virtual representation assigned to a participant may be linked to the physical state of the at least one body part of this participant captured by the sensor device assigned to the participant. Herein, the term "linked to" may include that the physical state of at least a body part of the participant, such as the movement of the participant's head and/or eyes, is captured or detected or sensed by the assigned sensor device and converted or transferred, by the system, in particular by the at least one host computing device, into a respective virtual movement of the assigned virtual representation of the participant. In other words, any gesture and/or facial expression of the participant is reflected by the assigned virtual representation in the virtual space in that the system, in particular the at least one host computing device, adapts the assigned virtual representation to the gesture and/or facial expression of the participant.

For example, the system, in particular the at lest one host computing device, may determine the physical state of the at least one body part by image and/or video recognition techniques including object tracking algorithms and/or computer vision techniques. The system may evaluate or analyse the images and/or videos received from the sensor devices related to the captured physical states of the at least one body parts of the participants and identify the physical states or changes in the physical states in the captured images and/or videos. Upon said identification, the system may then calculate and/or recalculate the appearance of the virtual representations of the participants and adapt the respective virtual representations accordingly.

In other words, the real physical state of at least one body part of a participant may be directly linked to the appearance of a virtual representation assigned to this participant.

By linking the real physical state of the at least one body part of the participants of the videoconference to a virtual space and virtual representations assigned to or representing the participants of the videoconference and adapting the virtual representations, it is in particular possible to include motions of the participants nearly realistically into a videoconference, which may render a digital conversation between human persons having a conversation by means of a videoconference set-up more natural and more realistic.

The determining the physical state and adapting the virtual representation may in particular be performed by the at least one host computing device. The adaptation may include reloading the virtual representation and/or controlling, in particular the position and/or orientation and/or motion of, the virtual representation.

Herein, the term "remaining" refers to the participants 1, 2, ..., x-1, x+1, ..., N of a videoconference with N participants, which are not equal to or different from the participant x, wherein x is an integer from 1 to N. In other words, when selecting a specific participant from the N participants, the term "remaining" refers to the N-1 participants of the videoconference, which are not equal to or different from the specific participant.

The integer N may be 2, 3, 4, 5, 6, 7, 8, 9, or 10. N may be at most about 20, 50, or 100.

In the following, the above-mentioned system according to the first aspect of the invention is described with reference to an exemplary embodiment. In this embodiment, N equals 2. That is, there are 2 participants of a videoconference. The at least one host computing device generates the virtual space including humanoid avatars of the two participants, for example by loading and/or executing a respective compiled application for simulating or modelling a virtual room. The system according to the present embodiment comprises 2 sensor devices, each being assigned to a single participant of the 2 participants, and 2 display devices, each being assigned to a single participant of the 2 participants. Assuming, we have participant 1 and participant 2, sensor device 1 and display device 1 are assigned to participant 1 and sensor device 2 and display device 2 are assigned to participant 2. Sensor device 1 continuously captures the physical state of the upper body of participant 1 and sensor device 2 continuously captures the physical state of the upper body of the participant 2. The system determines, for example by computer vision techniques, in which physical state the upper body of participants 1 and 2 are and transfers the determined physical state to the avatars assigned to participant 1 and participant 2 in the generated virtual space. As soon as either one of the participants 1 and 2 moves, the system, in particular the host computing device, determines or identifies the respective movement in the images and/or videos captured by the sensor devices and adapts the appearance or representation of the avatar assigned to the moving participant. The adapted avatar is then displayed to the other participant by or on the display device assigned to that participant. The adaptation of the avatars may be continuous or may be performed continuously. The adaptation may in particular be performed in real time or close to real time.

For example, avatar 2 of participant 2 is displayed to participant 1 on or by display device 1 which is assigned to participant 1. Participant 1 may move a hand to wave to avatar 2. Sensor device 1 may capture the waving and the system may convert the real hand waving of participant 1 into a virtual waving of avatar 1. Display device 2 being assigned to participant 2 then displays waving avatar 1 to participant 2. Participant 2 may react on the hand waving of avatar 1 by smiling, which is captured by sensor device 2 assigned to participant 2. The system converts the smile of participant 2 into a virtual smile of avatar 2. Display device 1 then displays the smiling avatar 2 to participant 1.

The above also applies if N equals 3, 4, 5, etc.

In the above-described manner, human-to-avatar-to-avatar-to-human interactions, including even eye contact, can be established in a videoconference.

In a preferred embodiment, for each participant, the system, in particular the at least one host computing device, may be configured to determine the field of gaze, in particular the point of gaze or the line of sight, of the participant and adapt the field of gaze of the assigned virtual representation in the virtual space based on the determining of the field of gaze.

Specifically, for determining the field of gaze, it may be determined what area or point of the display device the participant is observing or looking at. In other words, the field of gaze is determined with respect to the display device, in particular to its extensions including width and height. For example, the at least one host computing device may determine the width and height of the area of the display device, in particular of a display screen, assigned to the participant, which can be observed by the participant, and divide the area into segments, which may be mapped to corresponding segments in the virtual space. The at least one host computing device may then determine, relative to the assigned display device, which segment or segments the participant is looking at. In accordance to determining the segment or segments of the area of the display device, the at least one host computing device may then adapt the assigned virtual representation of the participant by reorientating, for example, the torso and/or head and/or eyes of the virtual representation in such a way that the assigned virtual representation appears to be looking at the corresponding segment or segments of the virtual space which are associated to the segment or segments of the area of the display device.

Said differently, the system may determine based on the determination of the physical state participant at which position in the virtual space, specifically at which virtual representation and/or object in the virtual space as displayed by the display device the participant is looking. This, i.e. at which position in the virtual space the participant is looking is considered when initially providing the virtual representation of the participant. The physical state is further considered e.g. in case the participant changes the position in the virtual space as displayed by the display device at which the participant looks, specifically at which virtual representation and/or object in the virtual space the participant looks. Base on this, e.g. change of the position in the virtual space the participant looks at, also the virtual representation of the participant is adapted. Thus, small changes in the field of gaze of the participant may result in a significant adaptation of the virtual representation of the participant, such as a change of the orientation of the head of the virtual representation of the participant.

That is, for example, when a participant 1 is initially looking at the segment or position of his or her display device corresponding to the face of the virtual representation assigned to participant 2 of the videoconference and subsequently changes his or her field of gaze to a segment or a position of the display device corresponding to the face of the virtual representation of participant 3 by only moving the eyes, the at least one host computing device may adapt the whole virtual representation of participant 1 in the virtual space depending how the virtual representations of all the participants are oriented or located with respect to each other in the virtual space. Thus, not only the eye position of the virtual representation of participant 1 may be adapted, but it may also be required to adapt torso and/or head orientation of the virtual representation of participant 1.

Thereby, the participants of the videoconference are for example able to recognize at which or at whom a specific participant is looking. The participants may recognize if the specific participant is looking towards them or at them or towards an object in the virtual space, such as a virtual depiction of a conference table or coffee mug.

Additionally or alternatively, for each participant, the system, in particular the at least one host computing device, may be configured to determine the facial expression of the participant and adapt the facial expression of the assigned virtual representation in the virtual space based on the determining of the facial expression.

Thereby, the participants may recognize the mood and/or reactions of a specific participant of the videoconference. This allows for implementing human reactions in a videoconference.

Additionally or alternatively, for each participant, the system, in particular the at least one host computing device, may be configured to determine the body posture of the participant and adapt the body posture of the assigned virtual representation in the virtual space based on the determining of the body posture.

Thereby, the participants may also recognize the reactions of a specific participant of the videoconference or to which of the participants the specific participants is turned. This also allows for implementing human reactions and/or interactions in a videoconference.

In a preferred embodiment, the N sensor devices, in particular every sensor device, may comprise or be a camera device, specifically a video camera, in particular a webcam.

In this embodiment, it may be particularly easy to integrate or install the system according to the first aspect into existing videoconference systems or set-ups. No additional, expensive hardware is needed.

As a webcam, conventional devices with a minimal resolution of 1080p may be used.

Additionally or alternatively, the N sensor devices, in particular every sensor device, may comprise or be one or more eye tracking sensors. For example, the N sensor devices, in particular all sensor devices or every sensor device, may comprise or be an infrared light source and/or an infrared light reflection detector. The infrared light source and/or infrared light reflection detector may also be comprised by the system.

In an embodiment, the system may comprise one or more motion capturing devices, including transmitters and receivers for transmitting and receiving the position in space of the at least one body part of a participant. For example, one or more transmitters may be attached to the at least one body part of the participant, wherein one or more receivers to receive position signals from the one or more transmitters may be attached to a display device assigned to the participant and/or comprised by a sensor device assigned to the participant.

In a preferred embodiment, the system, in particular the N sensor devices, more particularly every sensor device, may further be configured to track the field of gaze of the N participants, in particular of each participant. For example, the gaze tracking may be performed by one or more eye tracking sensors integrated in the sensor devices or external to the sensor devices or by applying, by the system, in particular by the at least one host computing device, image and/or video recognition techniques and/or tracking algorithms and/or computer vision techniques.

Specifically, each sensor device being assigned to one participant may be configured to track the field of gaze of this one participant. In other words, for each participant, the assigned sensor device may be configured to track the field of gaze of the participant.

The N sensor devices, in particular each sensor device, may have at least one processor and a storage unit to be able to determine the physical state of the at least one body part of the participants, in particular each participant, by applying image and/or video recognition techniques and/or computer vision techniques. The at least one processor and storage unit may enable the N sensor devices, in particular every sensor device, to determine the field of gaze and/or the facial expression and/or the body posture by applying image and/or video recognition techniques and/or computer vision techniques and/or to track the field of gaze by applying image and/or video recognition techniques and/or computer vision techniques and/or tracking algorithms.

In a preferred embodiment, the virtual space may comprise or be one continuous three-dimensional space or environment or room, in particular a virtual conference room. The virtual space may be implemented in or on the at least one host computing device, in particular in or on a storage unit of the at least one host computing device. The virtual space may be simulated or constructed by a three-dimensionally shaped grid. The virtual space may be rendered from an image of any suitable environment or room in which a videoconference can be held, i.e. the virtual space may be generated from an image by constructing a three-dimensional model of the image.

Additionally or alternatively, the virtual space may comprise a set of separated virtual subspaces, wherein the N virtual representations of the N participants may be distributed over the set of virtual subspaces. The virtual space may be the union of the set of virtual subspaces. Each or at least a few of the virtual subspaces may be a continuous three-dimensional space or environment or room, in particular a conference room. A virtual subspace of the set of virtual subspaces may comprise at least one of the virtual representations of the N participants. Every virtual representation may be comprised by one, in particular only one, virtual subspace of the set of virtual subspaces. The set of virtual subspaces may have as many subspaces as participants. The virtual space may comprise N virtual subspaces. One virtual subspace may also comprise more than one virtual representation of the participants.

Specifically, the virtual space may comprise a set of M separated virtual subspaces, wherein the N virtual representations of the N participants may be distributed over the set of M virtual subspaces, wherein M may be an integer greater than equal to 2 with M greater than N or M equals N. All virtual representations, i.e. N virtual representations of the N participants, may share one, in particular exactly one, virtual subspaces or at least two of the set of virtual subspaces.

The system may comprise two or more virtual spaces. In particular, the system may comprise as many virtual spaces as participants.

In a preferred embodiment, the system may further comprise N microphones, wherein in particular every sensor device may comprise one, in particular exactly one or only one, microphone of the N microphones. The system may further comprise N headsets.

In a preferred embodiment, every display device may comprise or be a display screen, such as a computer monitor. Additionally or alternatively, every display device may be comprised by one client computing device, such as a laptop or a desktop PC or an all-in-one PC. The client computing devices, in particular every client computing device, may be or may be used as a host computing device configured to generate the virtual space. Each client computing device may be configured to generate a local virtual space, in particular a virtual subspace of the set of virtual subspaces, comprising the virtual representation of a participant the client computing device is assigned to.

Herein, generating the virtual space may also include hosting the virtual space.

In a preferred embodiment, every sensor device of the N sensor devices may be assigned to one, in particular only one, display device of the N display devices and every sensor device may be disposed at the assigned display device. In particular, every sensor device may be connected to the assigned display device. Specifically, every sensor device may be mechanically and/or electrically connected to the assigned display device and/or the assigned client computing device. For example, every sensor device may be mechanically connected to the assigned display device by means of a clipping mechanism. Every sensor device may be electrically connected to a USB port of the assigned client computing device by means of a cable. Every sensor device may also be electrically and mechanically connected to the assigned display device.

The at least one host computing device and the N display devices and/or the N sensor devices may be in data communication with each other. Each display device of the N display devices may be in data communication with the assigned sensor device. In particular, each client computing device may be in data communication with the at least one host computing device.

In an embodiment, adapting the virtual representation may include at least one of reloading the virtual representation, re-rendering the virtual representation, recalculating the virtual representation, controlling the virtual representation or changing the virtual representation. For example, in case the virtual representation is a three-dimensional model of one of the participants having, the system, in particular the at least one host computing device, may control the virtual state, i.e. orientation and/or position and/or motion, of the at least one body part of the virtual representation corresponding to the physical state of the at least one body part of the participant in response to capturing and determining the physical state of the at least one body part of the participant.

The adapting the virtual representation may further include linking the physical state of the at least one body part of each participant captured by the assigned sensor device to the assigned virtual representation such that changes of the physical state may be immediately transferred to the assigned virtual representation. In particular, the determined physical state may be linked to the assigned virtual representation. In other words, the determined physical state may be mapped to the assigned virtual representation by techniques allowing for recognizing three-dimensional extensions and motions of an object in a two-dimensional image and/or video and projecting into a three-dimensional space.

A second aspect of the present invention relates to a method of using the system according to the first aspect or any of its embodiments for conducting a videoconference with N participants, N being an integer greater than or equal to 2.

Advantageously, by using the above-described system according to the first aspect or any of its embodiments, videoconferencing may be rendered more realistic and more natural, since human-to-human interactions may be simulated and introduced into a digital conversation.

Furthermore, more realistic videoconferencing without additional expensive hardware can be done.

A third aspect of the present invention relates to a host computing device, the host computing device comprising:
- at least one processor, and
- at least one storage unit, wherein a computer program is stored in the at least one storage unit, the computer program, when executed, causes the at least one processor to generate a virtual space for a videoconference with N participants, N being an integer greater than or equal to 2,
- wherein the virtual space comprises a virtual representation for each of the N participants,
- wherein to each of the N participants one virtual representation is assigned, and
- wherein the host computing device is configured to determine a physical state of at least one body part, such as an eye, of each of the N participants and adapt the assigned virtual representation of each participant based on the determining of the physical state of the at least one body part of each of the N participants.

All explanations, advantages, additional features and/or embodiments provided with reference to features and terms of the first aspect which are also comprised by the third aspect are also applicable to the third aspect or vice-versa.

The host computing device may comprise or be one or more server computers and/or a cloud computing platform. The host computing device may comprise or be at least one client computing device, such as a tablet PC, a laptop, a personal computer, or a smartphone.

As described above with reference to the first aspect of the invention, the host computing device may be configured to determine the physical state of the at least one body part of each participant from an image and/or video of the at least one body part of the respective participant captured by a sensor device assigned to the participant by applying, for example, computer vision techniques.

A fourth aspect of the present invention relates to a client computing device, the client computing device comprising:
- a sensor device configured to capture a physical state of at least one body part, such as an eye, of a participant of N participants in a videoconference, N being an integer greater than or equal to 2, and
- a display device configured to display to the participant an adapted virtual representation of at least one of the other participants of the videoconference in a virtual space, the other participants being different from the participant, wherein the adapted virtual representation is adapted based on a determination of a physical state of at least one body part of the other participants,
- wherein the virtual space comprises a virtual representations for each of the N participants,
- wherein to each of the N participants one virtual representation is assigned.

All explanations, advantages, additional features and/or embodiments provided with reference to features and terms of the first aspect which are also comprised by the fourth aspect are also applicable to the fourth aspect or vice-versa.

The client computing device and the host computing device may be in data communication with each other. The client computing device may be the host computing device. Alternatively, the host computing device may comprise the client computing device.

The client computing device may comprise at least one processor and a storage unit.

The client computing device may be a tablet PC, a laptop, a personal computer or a smartphone.

Herein, the term "other participants" can also be referred to as "remaining participants" and has the same meaning as described above with reference to the first aspect of the invention. The terms "other" and "remaining" may be used interchangeably. The sensor device as well as the display device may be assigned to only one participant of the N participants of a videoconference. The term "other" may then refer to all the participants which are different from the assigned participant and to the participants whose at least one virtual representation is displayed to the participant the display device is assigned to.

As described above with reference to the first aspect of the invention, the client computing device comprising the display device may be assigned to a specific participant of N participants participating in a videoconference. According to the fourth aspect, the display device is configured to display the adapted virtual representation of at least one of the other participants of the videoconference to the participant to whom the display device is assigned. The virtual representation of the at least one of the other participants may be adapted, by the host computing device according to the third aspect or any of its embodiments, as described above.

A fifth aspect of the present invention relates to a method for implementing human-to-human interactions in a videoconference with N participants, N being an integer greater than or equal to 2, the method comprising the steps of:
- capturing, by N sensor devices of a system, a physical state of at least one body part, such as an eye, of each of the N participants of the videoconference, wherein each sensor device of the N sensor devices is assigned to one participant of the N participants,
- generating, by at least one host computing device of the system, a virtual space,
   ∘ wherein the virtual space comprises a virtual representation for each of the N participants,
   ∘ wherein each virtual representation is assigned to one participant of the N participants, and
- for each participant of the N participants, determining the physical state of the at least one body part and adapting the assigned virtual representation based on the determining of the physical state of the at least one body part, and
- for each participant of the N participants, displaying, by a display device of the system, that is assigned to the participant, to the assigned participant, the virtual representation of at least one of the remaining participants of the videoconference in the virtual space.

Advantageously, the above method allows for implementing more realistic human-to-human interactions in a videoconference and thus rendering videoconferencing and digital conversations more natural and more realistic.

Further advantageously, the above-mentioned method may be performed on or by already existing videoconferencing systems or set-ups.

All explanations, advantages, additional features and/or embodiments provided with reference to features and terms of the first aspect which are also comprised by the fifth aspect are also applicable to the fifth aspect or vice-versa. In particular, all explanations advantages and additional embodiments of the functional features of the system according to the first aspect, which appear as method steps in the method according to the fifth aspect, are also applicable to the fifth aspect or vice-versa.

In the following, the above method according to the fifth aspect of the invention is described with reference to an exemplary embodiment, in which N equals 2. That is, the method may be for a videoconference with 2 participants.

In this embodiment, the at least one host computing device generates the virtual space including humanoid avatars of the two participants, for example by loading and/or executing a respective compiled application for simulating or modelling a virtual room. The system according to the present embodiment comprises 2 sensor devices, each being assigned to a single participant of the 2 participants, and 2 display devices, each being assigned to a single participant of the 2 participants. Assume we have participant 1 and participant 2, sensor device 1 and display device 1 are assigned to participant 1 and sensor device 2 and display device 2 are assigned to participant 2. Sensor device 1 continuously captures the physical state of the upper body of participant 1 and sensor device 2 continuously captures the physical state of the upper body of the participant 2. The system determines, for example by computer vision techniques, in which physical state the upper body of participants 1 and 2 are and transfers the determined physical state to the avatars assigned to participant 1 and participant 2 in the generated virtual space. As soon as either one of the participants 1 and 2 moves, the system, in particular the host computing device, determines or identifies the respective movement in the images or videos captured by the sensor devices and adapts the appearance or representation of the avatar assigned to the moving participant. The adapted avatar is then displayed to the other participant by or on the display device assigned to that participant. The adaption of the avatars may be continuous or may be performed continuously.

For example, avatar 2 of participant 2 is displayed to participant 1 on or by display device 1 which is assigned to participant 1. Participant 1 may move a hand to wave to avatar 2. Sensor device 1 may capture the waving and the system may convert the real hand waving of participant 1 into a virtual waving of avatar 1. Display device 2 being assigned to participant 2 then displays waving avatar 1 to participant 2. Participant 2 may react on the hand waving of avatar 1 by smiling, which is captured by sensor device 2 assigned to participant 2. The system converts the smile of participant 2 into a virtual smile of avatar 2. Display device 1 then displays the smiling avatar 2 to participant 1.

In the above-described manner, human-to-avatar-to-avatar-to-human interactions, including even eye contact, can be established in a videoconference.

The method steps of the fifth aspect as described above and of any embodiment as described below may be performed in subsequent order or at least in part simultaneously, i.e. with a timely overlap or simultaneously or in parallel. For example, the virtual space may be generated in a first step and, subsequently, the physical state of the at least one body part of the participants may constantly be captured, determined, and the virtual representations may constantly be adapted and displayed to the participants, wherein the steps of capturing, determining, adapting and displaying may all be performed with a timely overlap, in particular simultaneously or in parallel.

In a preferred embodiment, the method may comprise determining, by the system, in particular the at least one host computing device, the field of gaze, in particular the point of gaze or the line of sight, of each participant and adapting, by the system, in particular the at least one host computing device, the field of gaze of the assigned virtual representation in the virtual space based on the determining of the field of gaze.

Thereby, the participants of the videoconference are for example able to recognize at which or at whom a specific participant is looking. The participants may recognize if the specific participant is looking towards them or at them or towards an object in the virtual space, such as a virtual depiction of a conference table or coffee mug.

Additionally or alternatively, the method may comprise determining, by the system, in particular the at least one host computing device, the facial expression of each participant and adapting, by the system, in particular the at least one host computing device, the facial expression of the assigned virtual representation in the virtual space based on the determining of the facial expression.

Thereby, the participants may recognize the mood and/or reactions of a specific participant of the videoconference. This allows for implementing human reactions in a videoconference.

Additionally or alternatively, the method may comprise determining, by the system, in particular the at least one host computing device, the body posture of each participant and adapting, by the system, in particular the at least one host computing device, the body posture of the assigned virtual representation in the virtual space based on the determining of the body posture.

Thereby, the participants may also recognize the reactions of a specific participant of the videoconference or to which of the participants the specific participants is turned. This also allows for implementing human reactions and/or interactions in a videoconference.

In a preferred embodiment, the method may comprise tracking, by the system, in particular by the N sensor devices, the field of gaze of the N participants. The tracking may include applying image and/or video recognition techniques and/or tracking algorithms and/or computer vision techniques.

In a preferred embodiment, every display device displays, to the assigned participant, the virtual representation of at least one of the remaining participants in the virtual space in such a way that the assigned participant recognizes the line of sight of the virtual representation of the at least one of the remaining participants.

In a preferred embodiment, the method may further comprise the step of capturing, by the N sensor devices, in particular by N microphones, voice input by the N participants. Each microphone of the N microphones may be assigned to one participant of the N participants.

In an embodiment, the method according to the fifth aspect or any of its embodiments may be performed by or on the system according to the first aspect or any of its embodiments.

As already mentioned above with reference to the system according to the first aspect, the physical state may preferably be or include position and/or motion. The physical state may also be or include changes in position and/or motion.

A sixth aspect of the present invention relates to a host method, the host method comprising:
- generating, by a host computing device, a virtual space for a videoconference with N participants, N being an integer greater than or equal to 2,
   ∘ wherein the virtual space comprises a virtual representation for each of the N participants,
   ∘ wherein to each of the N participants one virtual representation is assigned, and
- determining a physical state of at least one body part, such as eye, of each of the N participants, and
- adapting the assigned virtual representation of each participant based on the determining of the physical state of the at least one body part of each of the N participants.

All explanations, advantages, additional features and/or embodiments provided with reference to features and terms of the third and fifth aspect which are also comprised by the fifth aspect are also applicable to the sixth aspect or vice-versa.

Generating may include loading and/or launching and/or executing a compiled application for initializing the virtual space. Generating may further include compiling a program to initialize the virtual space. Generating may further include setting up the virtual space as a three-dimensionally shaped grid construction. Generating may also include rendering the virtual space from a three-dimensional model or image of a space or any room, such as a conference or meeting room, appropriate for the videoconference and for display of the virtual representations of the participants in this room.

The above-described host method may be performed by the host computing device according to the third aspect of the invention or any of its embodiments.

A seventh aspect of the present invention relates to a client method, the client method comprising:
- capturing, by a sensor device of a client computing device, a physical state of at least one body part, such as an eye, of a participant of N participants of a videoconference, N being an integer greater than or equal to 2,
- displaying, by a display device of the client computing device, to the participant an adapted virtual representation of at least one of the other participants of the videoconference in a virtual space, the other participants being different from the participant, wherein the adapted virtual representation is adapted based on a determination of a physical state of at least one body part of the other participants,
- wherein the virtual space comprises a virtual representation for each of the N participants,
- wherein to each of the N participants one virtual representation is assigned.

All explanations, advantages, additional features and/or embodiments provided with reference to features and terms of the fourth and fifth aspect which are also comprised by the seventh aspect are also applicable to the seventh aspect or vice-versa.

The steps of capturing and displaying may be performed in subsequent order and/or with a timely overlap. They may also be performed simultaneously and/or constantly or in parallel.

The above-described client method may be performed by the client computing device according to the fourth aspect of the invention or any of its embodiments.

The methods according to the sixth aspect or any of its embodiments and according to the seventh aspect or any of its embodiments may be performed in subsequent order. The methods may be performed with a timely overlap or in parallel. Both methods may be implemented in and/or performed by the system according to the first aspect of the invention or any of its embodiments.

An eighth aspect of the present invention relates to a computer program product comprising instructions which, when executed, cause at least one processor to perform the method according to the fifth aspect or any of its embodiments or to perform any of the methods according to the sixth aspect or any of its embodiments and the seventh aspect or any of its embodiments.

What follows is the description of the drawings. The drawings show further embodiments of the present invention. Individual features depicted in the drawings may be combined to result in new embodiments.
**Figure 1** shows a schematic representation of an embodiment of the system according to the first aspect of the invention.
**Figure 2** shows a depiction of a participant in a videoconference using an embodiment of the system according to the first aspect of the invention.
**Figure 3** shows an embodiment of a virtual space according to the invention.
**Figure 4** shows a schematic depiction of a computing device.

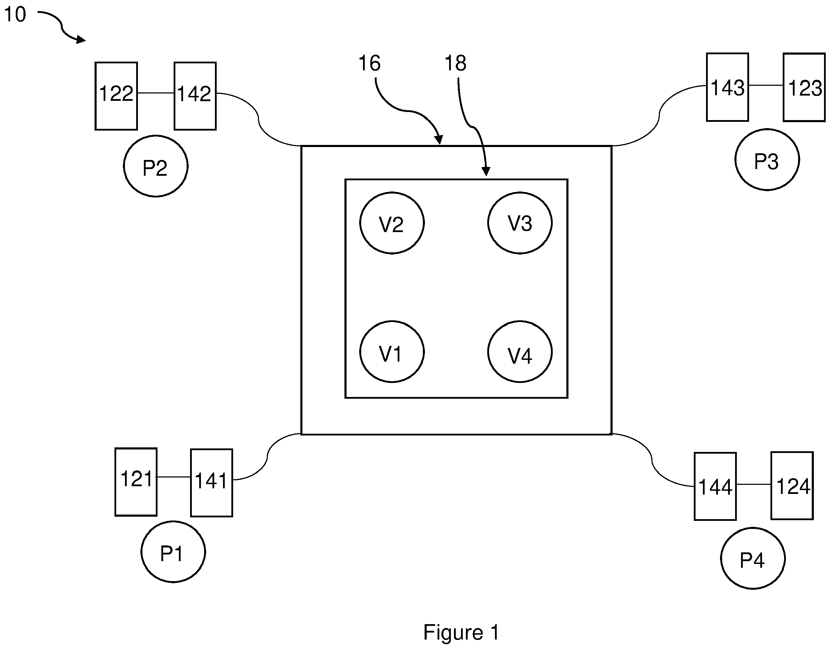

**Figure 1** shows a schematic representation of an embodiment of the system according to the first aspect of the invention.

Figure 1 shows a system 10 for a videoconference with an exemplary number of four participants P1, P2, P3, P4. For each participant P1, P2, P3, P4, a display device 141, 142, 143, 144 is provided, such as a personal computer including a computer monitor, a laptop or an all-in-one computer, a tablet device, a smart phone or the like. Display device 141 is assigned to participant P1, display device 142 is assigned to participant P2, display device 143 is assigned to participant P3, and display device 144 is assigned to participant P4. Furthermore, for every participant P1, P2, P3, P4, a corresponding sensor device 121, 122, 123, 124, such as a webcam, optionally including eye tracking sensors, is provided. Sensor device 121 is connected to display device 141, sensor device 122 is connected to display device 142, sensor device 123 is connected to display device 143, and sensor device 124 is connected to display device 144. Each display device and/or the sensor device may be connected to or be part of a client computer device (not shown in figure 1). Thus, for every participant P1, P2, P3, P4, there may be provided a client computer device (not shown). In this description, the term display device may be equated with a combined device including a client computer and a display. Thus, such as combined device may also be referred to as client computing device. In case there are more or less participants of the video conference, the above explanations equally apply, specifically if more than four participants participate in the videoconference.

The system 10 further includes a host computing device 16 that hosts a virtual space 18. The host computing device 16 may specifically host the virtual space 18 when a videoconference is started or initiated by one of the participants P1, P2, P3 or P4. The host computing device 16 may be a cloud computing platform to which all the display devices 141, 142, 143, 144 have access, particularly via the client computing devices and/or with which the display devices 141, 142, 143, 144 communicate, particularly via the client computing devices. The host computing device 16 may be part of or consist of a distributed system. The virtual space 18 is implemented by and/or located in the host computing device 16. The virtual space 18 may already be generated when a videoconference is initiated or may be generated upon initiating the videoconference. The virtual space 18 may be initialized when the videoconference is started and/or initiated.

The virtual space 18 may for example be stored and/or implemented in the host computing device 16. It may be stored as an executable application.

If one of the participants P1, P2, P3, P4 initiates or starts a videoconference, e.g. via his or her display device, the system 10, in particular the host computing device 16, may provide a variety of environments in which the videoconference can be held and from which the participant P1, P2, P3, P4 can choose. According to the participant's choice, the host computing device 16 may then generate the virtual space by loading the virtual space 18. For example, the environments from which the participant P1, P2, P3, P4 may choose may be images of spaces or rooms, such as a conference room or dining room or a bar or the like. Specifically, the participant may choose an image for the virtual space. The chosen image may be rendered when the virtual space 18 is loaded to obtain a three-dimensional representation of the image or the three-dimensional representation of the image is selected and loaded from a plurality of three-dimensional representations stored in or obtained by the host computing device 16 upon choosing the image for the environment.

Further to generating the virtual space 18, one or more participants, specifically every participant P1, P2, P3, P4, may choose from a variety of virtual representations for the videoconference which are to represent the participants P1, P2, P3, P4. In this description, a virtual representation may also be referred to as avatar. The virtual representations or avatars may for example be photorealistic representations of the participants or models of cartoonish characters, mythic or fantasy creatures, etc. It is possible that for a virtual representation of a participant, e.g. only the head, specifically the face of a participant, is rendered in a photorealistic manner while the rest of the body may not be a photorealistic representation. In an example it is possible that for a virtual representation of a participant, e.g. only the head, specifically the face of a participant, is rendered in a photorealistic manner based on a photographic image of the head, specifically the face of the participant while the rest of the body may not be based on a photographic image of the participant. Nevertheless, also the rest of the body may be rendered in a photorealistic manner but not based on a photographic image of the participant but e.g. of a fantasy body. The photographic image(s) of the head, and/or the face, and/or the body may be obtained by the image sensor device(s) 121, 122, 123, 124. Every participant P1, P2, P3, P4 may choose a virtual representation. In this example, participant P1 chooses a virtual representation V1, participant P2 chooses a virtual representation V2, participant P3 chooses a virtual representation V3, and participant P4 chooses a virtual representation V4.

The virtual representations V1, V2, V3, V4 may then be loaded and/or rendered into the virtual space 18.

The sensor devices 121, 122, 123, 124 constantly or continuously capture the positions and motions of their respective participants P1, P2, P3, P4. That is, the sensor devices 121, 122, 123, 124 caqpture the physical state of parts of the bodies or the whole bodies of their respective participants P1, P2, P3, P4. In other words, when, for example, participant P1 moves his or her arm, the sensor device 121 captures or detects the physical state, i.e. the change in position and/or the motion, of the arm.

The host computing device 16 then transfers the captured positions and motions directly onto the virtual representations V1, V2, V3, V4 of the participants P1, P2, P3, P4. In other words, the host computing device may continuously render the virtual representations taking into account data obtained by the sensor devices 121, 122, 123, 124. This rendering may specifically be carried out in real time or next to real time.

For example, the host computing device 16 may determine or recognize the physical state, i.e. the position and/or motion, of every participant P1, P2, P3, P4 in the images and/or videos of the participants P1, P2, P3, P4 captured by their respective sensor devices 121, 122, 123, 124 by using computer vision techniques and/or image and/or video recognition techniques. The position and/or motion of a participant's body are an example of the physical state of at least a body part of a participant. A motion may be a change of the physical state. If participant P3, for example, changes his physical state, the host computing device 16 recognizes the change in the physical state and adapts the virtual representation V3 of participant P3 accordingly by recalculating the virtual representation V3 such that the virtual representation V3 also reflects the current physical state of the participant after the change. If participant P3, for example, begins to smile, the host computing device 16 determines or recognizes the smiling and adapts the virtual representation V3 of participant P3 accordingly by recalculating the virtual representation V3 such that the virtual representation V3 also begins to smile. In other words, the initial physical state of the participant is before the participant smiled. The current physical state is the participant smiling. The host computing device, based on the captured physical state, changes the virtual representation from before smiling to smiling, thereby adapting the virtual representation.

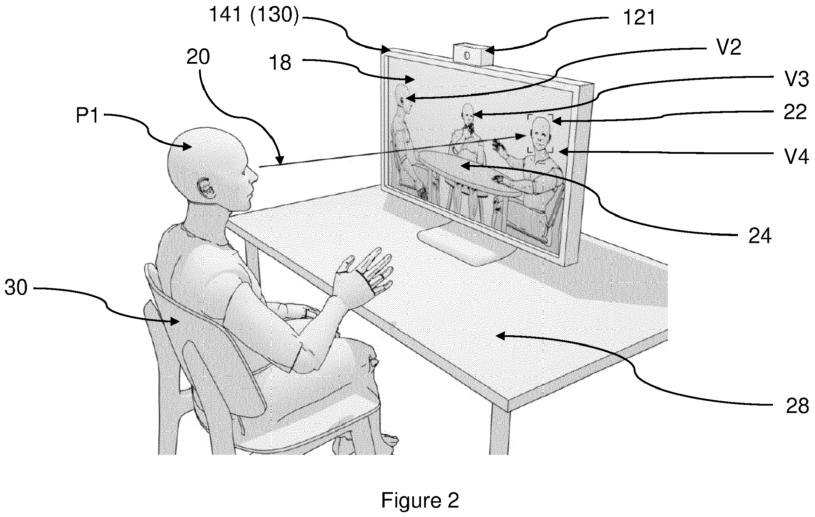

In addition, or as an alternative, the field of gaze of the participants P1, P2, P3, P4 may be determined and/or tracked by the system 10 such that changes of the field of gaze can be represented by the virtual representations V1, V2, V3, V4. This is described in more detail in figure 2 below. Thus, as an alternative or in addition also the field of gaze can be an exemplary physical state of a participant's body part, namely his or her eye or eyes and/or head position. The physical state may comprise a number of different components, such as facial features (including smiling) and/or field of gaze, and/or orientation of the face and/or orientation of the head and/or orientation of shoulders or the like. The physical state may consist of one of the before mentioned components or of a subset of the before mentioned components or of all of the before mentioned components.

**Figure 2** shows a depiction of a participant in a videoconference using an embodiment of the system according to the first aspect of the invention.

Figure 2 shows, exemplarily, participant P1 sitting at his or her desk 28 in a chair 30 in front of a client computing device 130 including display device 141 and participating in a videoconference with participants P2, P3, P4 using system 10. Participant P1 observes the virtual space 18 from a certain viewpoint, e.g. the viewpoint of his or her virtual representation V1 or avatar, i.e. from the ego perspective of his or her virtual representation or avatar (V1 in figure 1). The virtual space 18 showing the virtual representations V2, V3, V4 of all the other participants P2, P3, P4 is displayed to participant P1 by or on his or her display device 141. The virtual space 18 may also include, apart from the virtual representations V1, V2, V3, V4 of the participants P1, P2, P3, P4, other virtual objects such as a table 24 around which the virtual representations V1, V2, V3, V4 are located or simulated to be sitting.

The sensor device 121, e.g. a webcam, is attached and/or connected to the display device 141, in particular to a computer monitor or screen. The sensor device 121 captures the physical state of the upper body, including the face expression and body pose and/or motion, of participant P1, which is directly transferred to the virtual representation or avatar V1 of participant P1 (not shown on the display device 141). In other words, as already described above, the virtual representation V1 of participant P1 is adapted to the captured physical state of his or her upper body.

Eye tracking may also be performed using corresponding sensors (not shown) attached to the display device 141, external to the sensor device 121 or integrated in the sensor device 121. Said eye tracking sensors may estimate the field of gaze 22 and/or the line of sight 20 of participant P1.

The field of gaze 22 and/or the line of sight 20 may alternatively or additionally be estimated, calculated, determined or recognized by the system 10, in particular the host computing device 16 or the display device 141, by applying image and/or video recognition techniques and/or tracking algorithms and/or computer vision techniques.

The head pose and gaze of the avatar V1 of participant P1 is then controlled, i.e. adapted, accordingly.

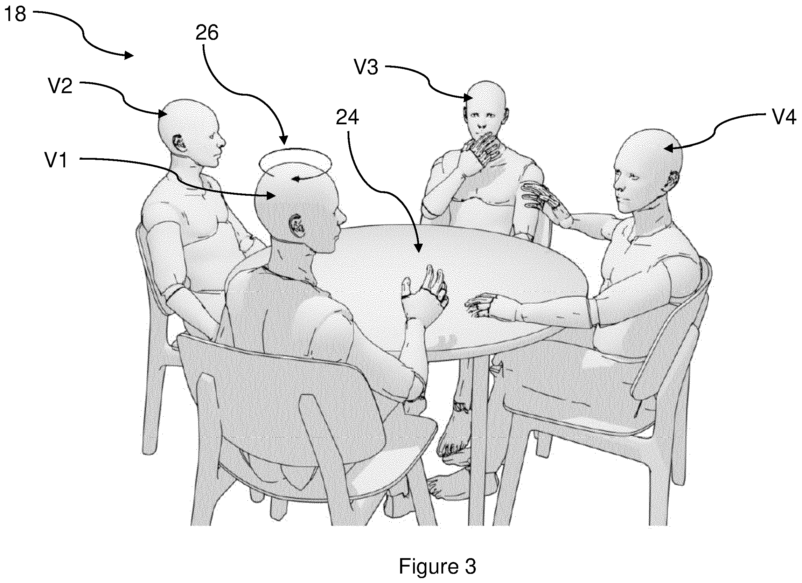

In the situation shown in figure 2, participant P1 is looking at the display device 141, specifically at the face, in particular into the eyes, of the avatar or virtual representation V4 of participant P4. That is, in the virtual space 18, the virtual representation V1 of participant P1 is displayed to be looking at the face, in particular into the eyes, of the virtual representation V4 of participant P4. This is shown in figure 3 as described below. Relating to the field of gaze for example, the host computing device does not adapt the field of gaze of the virtual representation V1 of participant P1 in absolute manner (unlike for example a smile or a gesture). Rather, the host computing device determines at which position in the virtual space 18, as displayed on the display device 141 participant P1 is looking and then the host computing device 16 renders the virtual representation V1 of participant P1 in the virtual space 18 taking into consideration this field of gaze. Thus, also if participant P1 may only slightly change the field of gaze to change e.g. the gaze from looking from virtual representation V4 to virtual representation V3, the virtual representation V1 of participant P1 may undergo a more pronounced change. In the virtual space 18 in order for virtual representation V1 to carry out the change of gaze from virtual representation V4 to virtual representation V3, it might be necessary to change the orientation of the head of the virtual representation V1.

Everything which was described with reference to a specific participant, such as P1, also holds and/or applies to all the other participants P2, P3, P4.

By the invention as being depicted exemplarily in figures 1 and 2, human interactions may be implemented in a videoconference. The invention further allows for automatically making correct eye contact between the participant's avatars in the virtual space. This may enhance the immersion in the conversation over conventional videoconferencing systems. Participants can, among other things, intentionally make eye contact to signal that they want to make a contribution to the conversation, which can be recognized by all other participants.

Additionally, all participants can observe if another user is, e.g., listening carefully or taking notes.

Thereby, the invention can make videoconferencing more immersive and natural by simulating a real-world conversation much better than existing systems.

What is more, advantageously, the invention may be implemented, integrated or installed in already existing systems more easily and in a more cost-efficient manner since no special hardware is required. Instead, state-of-the-art computing devices, such as laptops and webcams, may be used.

**Figure 3** shows an embodiment of a virtual space according to the invention.

Figure 3 shows the virtual space 18 with a shifted viewpoint in comparison to figure 2. Figure 3 shows an inside view of the virtual space 18 as if an observer is in the virtual space 18.

The virtual space 18 is a depiction of a small conference or meeting room including a virtual object, i.e. a table 24, around which the virtual representations V1, V2, V3, V4 of the participants P1, P2, P3, P4 are located.

All participants P1, P2, P3, P4 are shown or represented as virtual representations V1, V2, V3, V4. The avatar or virtual representation V1 in the bottom center represents participant P1 shown in figure 2. The head pose and/or motion 26 of the avatar or virtual representation V1 is manipulated, in particular by the host computing device 16, to match the estimated field of gaze 22 and/or line of sight 20 of avatar V1. Specifically, the host computing device is adapting the virtual representation of each virtual representation. Thus, system 10 renders the avatar V1 of participant P1 so that it correctly makes eye contact with the avatar V4 of participant P4 on the right in figure 3, which is visible to all the participants P2, P3, P4 in the videoconference on their respective display devices 142, 143, 144. Especially, participant P4 can recognize, via his or her display device 144, that participant P1 is looking towards or at him or her by recognizing that the avatar V1 displayed by the display device 144 is looking towards or at participant P4 from his or her display device 144. But also participants P2 and P3 can easily recognize that the gaze of participant P1 is focused on participant P4, since in virtual space shown by their respective display devices the field of gaze of the virtual representation V1 is directed to virtual representation V4. For example, in the virtual space 18 displace on display devices 142, 143, the head of virtual representation V1 is oriented towards virtual representation V4. Likewise, if participant P1 would change the field of gaze to look at V3 instead of V4 as displayed on display device 141, the virtual representation V1 in the virtual space 18 would similarly change, e.g. the orientation of the head of virtual representation V1 might be changed to be directed to virtual representation V3.

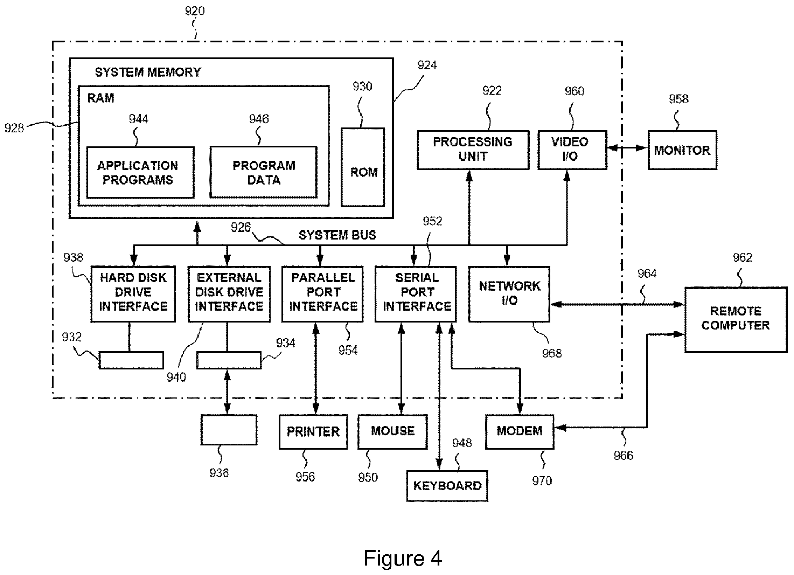

**Figure 4** shows an exemplary computing device for implementing the invention including a general purpose computing device in the form of a conventional computing environment 920 (e.g. a personal computer) which may be used as the host computing device 16 or at least one of the display devices 141, 142, 143, 144 described in connection with the above embodiments.

The conventional computing environment includes a processing unit 922, a system memory 924, and a system bus 926. The system bus couples various system components including the system memory 924 to the processing unit 922. The processing unit 922 may perform arithmetic, logic and/or control operations by accessing the system memory 924. The system memory 924 may store information and/or instructions for use in combination with the processing unit 922.

The system memory 924 may include volatile and non-volatile memory, such as a random access memory (RAM) 928 and a read only memory (ROM) 930. A basic input/output system (BIOS) containing the basic routines that helps to transfer information between elements within the personal computer 920, such as during startup, may be stored in the ROM 930. The system bus 926 may be any of several types of bus structures including a memory bus or memory controller, a peripheral bus, and a local bus using any of a variety of bus architectures.

The personal computer 920 may further include a hard disk drive 932 for reading from and writing to a hard disk (not shown), and an external disk drive 934 for reading from or writing to a removable disk 936. The removable disk may be a magnetic disk for a magnetic disk driver or an optical disk such as a CD ROM for an optical disk drive. The hard disk drive 932 and the external disk drive 934 are connected to the system bus 926 by a hard disk drive interface 938 and an external disk drive interface 940, respectively. The drives and their associated computer-readable media provide nonvolatile storage of computer readable instructions, data structures, program modules and other data for the personal computer 920. The data structures may include relevant data for the implementation of the methods according to the invention as described above. The relevant data may be organized in a database, for example a relational database management system or an object-oriented database management system.

Although the exemplary environment described herein employs a hard disk (not shown) and an external disk 936, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk 936, ROM 930 or RAM 928, including an operating system (not shown), one or more application programs 944, other program modules (not shown), and program data 946.

A user may enter commands and information, as discussed below, into the personal computer 920 through input devices such as keyboard 948 and mouse 950. Other input devices (not shown) may include a microphone (or other sensors), joystick, game pad, scanner, or the like. These and other input devices may be connected to the processing unit 922 through a serial port interface 952 that is coupled to the system bus 926, or may be collected by other interfaces, such as a parallel port interface 954, game port or a universal serial bus (USB). Further, information may be printed using printer 956. The printer 956, and other parallel input/output devices may be connected to the processing unit 922 through parallel port interface 954. A monitor 958 or other type of display device is also connected to the system bus 926 via an interface, such as a video input/output 960. In addition to the monitor, computing environment 920 may include other peripheral output devices (not shown), such as speakers or other audible output.

The computing environment 920 may communicate with other electronic devices such as a computer, telephone (wired or wireless), personal digital assistant, television, or the like. To communicate, the computer environment 920 may operate in a networked environment using connections to one or more electronic devices. Figure 4 depicts the computer environment networked with remote computer 962. The remote computer 962 may be another computing environment such as a server, a router, a network PC, a peer device or other common network node, and may include many or all of the elements described above relative to the computing environment 920. The logical connections depicted in figure 4 include a local area network (LAN) 964 and a wide area network (WAN) 966. Such networking environments are commonplace in offices, enterprise-wide computer networks, intranets and the Internet and may particularly be encrypted.

When used in a LAN networking environment, the computing environment 920 may be connected to the LAN 964 through a network I/O 968. When used in a WAN networking environment, the computing environment 920 may include a modem 970 or other means for establishing communications over the WAN 966. The modem 970, which may be internal or external to computing environment 920, is connected to the system bus 926 via the serial port interface 952. In a networked environment, program modules depicted relative to the computing environment 920, or portions thereof, may be stored in a remote memory storage device resident on or accessible to remote computer 962. Furthermore, other data relevant to the methods according to the invention (described above) may be resident on or accessible via the remote computer 962. It will be appreciated that the network connections shown are exemplary and other means of establishing a communication link between the electronic devices may be used.

The above-described computing device is only one example of the type of computing device that may be used to implement the methods according to the invention.

### List of Reference Numerals

- P1, P2, P3, P4: participant
- V1, V2, V3, V4: virtual representation of participant
- 10: system
- 121, 122, 123, 124: sensor device
- 130: client computing device
- 141, 142, 143, 144: display device
- 16: host computing device
- 18: virtual space
- 20: line of sight
- 22: field of gaze
- 24: object in virtual space
- 26: motion of head of participant transferred onto respective virtual representation
- 28: table
- 30: chair
- 920: conventional computing environment
- 922: processing unit
- 924: system memory
- 926: system bus
- 928: random access memory (RAM)
- 930: read only memory (ROM)
- 932: hard disk drive
- 934: external disk drive
- 936: removable disk
- 938: hard disk drive interface
- 940: external disk drive interface
- 944: one or more application programs
- 946: program data
- 948: keyboard
- 950: mouse
- 952: serial port interface
- 954: parallel port interface
- 956: printer
- 958: monitor
- 960: video input/output
- 962: remote computer
- 964: local area network (LAN)
- 966: wide area network (WAN)
- 968: network I/O
- 970: modem

## Claims

1. A system (10) for a videoconference with N participants (P1, P2, P3, P4), N being an integer greater than or equal to 2, the system comprising:
- N sensor devices (121, 122, 123, 124), wherein each sensor device of the N sensor devices (121, 122, 123, 124) is assigned to one participant of the N participants (P1, P2, P3, P4),
- N display devices (141, 142, 143, 144), wherein each display device of the N display devices (141, 142, 143, 144) is assigned to one participant of the N participants (P1, P2, P3, P4), and
- at least one host computing device (16) configured to generate a virtual space (18),
∘ wherein the virtual space (18) comprises a virtual representation (V1, V2, V3, V4) for each of the N participants (P1, P2, P3, P4), and
∘ wherein to each of the N participants (P1, P2, P3, P4) one virtual representation (V1, V2, V3, V4) is assigned,
- wherein, for each participant (P1):
∘ the assigned sensor device (121) is configured to capture a physical state of at least one body part, such as an eye, of the participant (P1),
∘ the physical state of the at least one body part of the participant (P1) is determined and the assigned virtual representation (V1) is adapted based on the determining of the physical state of the at least one body part of the participant (P1), and
∘ the assigned display device (141) is configured to display, to the participant (P1), the virtual representation (V2, V3, V4) of at least one of the remaining participants (P2, P3, P4) of the videoconference in the virtual space (18).

2. The system (10) according to claim 1, wherein the physical state includes position and/or motion.

3. The system (10) according to any one of the preceding claims, wherein, for each participant (P1), the system (10) is configured to:
determine the field of gaze (22) of the participant (P1), in particular the point of gaze or the line of sight (20), and adapt the field of gaze (22) of the assigned virtual representation (V1) in the virtual space (18) based on the determining of the field of gaze (22), and/or
determine the facial expression of the participant (P1) and adapt the facial expression of the assigned virtual representation (V1) in the virtual space (18) based on the determining of the facial expression, and/or
determine the body posture of the participant (P1) and adapt the body posture of the assigned virtual representation (V1) in the virtual space (18) based on the determining of the body posture.

4. The system (10) according to any one of the preceding claims,
wherein the N sensor devices (121, 122, 123, 124), in particular every sensor device, comprise a camera device, specifically a video camera, in particular a webcam, and/or
wherein the N sensor devices (121, 122, 123, 124), in particular every sensor device, comprise one or more eye tracking sensors.

5. The system (10) according to any one of the preceding claims, wherein the system (10), in particular the N sensor devices (121, 122, 123, 124), more particularly every sensor device, is further configured to track the field of gaze (22) of the N participants (P1, P2, P3, P4), in particular of each participant.

6. The system (10) according to any one of the preceding claims,
wherein the virtual space (18) is one continuous three-dimensional space, in particular a virtual conference room, and/or
the virtual space (18) comprises a set of separated virtual subspaces, wherein the N virtual representations (V1, V2, V3, V4) of the N participants (P1, P2, P3, P4) are distributed over the set of virtual subspaces.

7. The system (10) according to any one of the preceding claims, wherein every display device comprises a display screen, such as a computer monitor, and/or
wherein every sensor device assigned to a participant and every display device assigned to the participant are comprised by a client computing device assigned to the participant, and/or
wherein the system comprises N client computing devices.

8. The system (10) according to any one of the preceding claims, wherein the at least one host computing device (16) comprises one or more server computers and/or a cloud computing platform.

9. A method of using the system (10) according to any one of the preceding claims for conducting a videoconference with N participants (P1, P2, P3, P4), N being an integer greater than or equal to 2.

10. A host computing device (16), the host computing device (16) comprising:
- at least one processor, and
- at least one storage unit, wherein a computer program is stored in the at least one storage unit, the computer program, when executed, causes the at least one processor to generate a virtual space (18) for a videoconference with N participants (P1, P2, P3, P4), N being an integer greater than or equal to 2,
- wherein the virtual space (18) comprises a virtual representation (V1, V2, V3, V4) for each of the N participants (P1, P2, P3, P4),
- wherein to each of the N participants (P1, P2, P3, P4) one virtual representation (V1, V2, V3, V4) is assigned, and
- wherein the host computing device is configured to determine a physical state of at least one body part, such as an eye, of each of the N participants (P1, P2, P3, P4) and adapt the assigned virtual representation (V1) of each participant (P1) based on the determining of the physical state of the at least one body part of each of the N participants (P1, P2, P3, P4).

11. A client computing device, the client computing device comprising:
- a sensor device (121) configured to capture a physical state of at least one body part, such as an eye, of a participant (P1) of N participants (P1, P2, P3, P4) in a videoconference, N being an integer greater than or equal to 2, and
- a display device (141) configured to display to the participant (P1) an adapted virtual representation (V2, V3, V4) of at least one of the other participants (P2, P3, P4) of the videoconference in a virtual space (18), the other participants (P2, P3, P4) being different from the participant (P1), wherein the adapted virtual representation (V2, V3, V4) is adapted based on a determination of a physical state of at least one body part of the other participants (P2, P3, P4),
- wherein the virtual space (18) comprises a virtual representations (V1, V2, V3, V4) for each of the N participants (P1, P2, P3, P4),
- wherein to each of the N participants (P1, P2, P3, P4) one virtual representation (V1, V2, V3, V4) is assigned.

12. A method for implementing human-to-human interactions in a videoconference with N participants (P1, P2, P3, P4), N being an integer greater than or equal to 2, the method comprising the steps of:
- capturing, by N sensor devices (121, 122, 123, 124) of a system (10), a physical state of at least one body part, such as an eye, of each of the N participants (P1, P2, P3, P4) of the videoconference, wherein each sensor device of the N sensor devices (121, 122, 123, 124) is assigned to one participant of the N participants (P1, P2, P3, P4),
- generating, by at least one host computing device (16) of the system (10), a virtual space (18),
∘ wherein the virtual space (18) comprises a virtual representation (V1, V2, V3, V4) for each of the N participants (P1, P2, P3, P4),
∘ wherein each virtual representation (V1, V2, V3, V4) is assigned to one participant of the N participants (P1, P2, P3, P4), and
- for each participant of the N participants (P1, P2, P3, P4), determining the physical state of the at least one body part and adapting the assigned virtual representation based on the determining of the physical state of the at least one body part, and
- for each participant (P1) of the N participants (P1, P2, P3, P4), displaying, by a display device (141) of the system (10), that is assigned to the participant (P1), to the assigned participant (P1), the virtual representation (V2, V3, V4) of at least one of the remaining participants (P2, P3, P4) of the videoconference in the virtual space (18).

13. A host method, the host method comprising:
- generating, by a host computing device (16), a virtual space (18) for a videoconference with N participants (P1, P2, P3, P4), N being an integer greater than or equal to 2,
∘ wherein the virtual space (18) comprises a virtual representation (V1, V2, V3, V4) for each of the N participants (P1, P2, P3, P4),
∘ wherein to each of the N participants (P1, P2, P3, P4) one virtual representation (V1, V2, V3, V4) is assigned, and
- determining a physical state of at least one body part, such as eye, of each of the N participants (P1, P2, P3, P4), and
- adapting the assigned virtual representation (V1) of each participant (P1) based on the determining of the physical state of the at least one body part of each of the N participants (P1, P2, P3, P4).

14. A client method, the client method comprising:
- capturing, by a sensor device (121) of a client computing device, a physical state of at least one body part, such as an eye, of a participant (P1) of N participants (P1, P2, P3, P4) of a videoconference, N being an integer greater than or equal to 2,
- displaying, by a display device (141) of the client computing device, to the participant (P1) an adapted virtual representation (V2, V3, V4) of at least one of the other participants (P2, P3, P4) of the videoconference in a virtual space (18), the other participants (P2, P3, P4) being different from the participant (P1), wherein the adapted virtual representation (V2, V3, V4) is adapted based on a determination of a physical state of at least one body part of the other participants (P2, P3, P4),
- wherein the virtual space (18) comprises a virtual representation (V1, V2, V3, V4) for each of the N participants (P1, P2, P3, P4),
- wherein to each of the N participants (P1, P2, P3, P4) one virtual representation (V1, V2, V3, V4) is assigned.

15. A computer program product comprising instructions which, when executed, cause at least one processor to perform the method according to any one of the claims 12 to 14.
